# EUROPÄISCHE PATENTSCHRIFT

(11) **EP 4 660 513 B1**
(45) Veröffentlichungstag und Bekanntmachung des Hinweises auf die Patenterteilung: **08.04.2026**
(21) Anmeldenummer: 24180077.0
(22) Anmeldetag: 05.06.2024
(51) Int. Cl.: F16P 3/14

(54) **SICHERHEITSSYSTEM UND VERFAHREN ZUM ABSICHERN EINER MASCHINE**
SAFETY SYSTEM AND METHOD FOR SECURING A MACHINE
SYSTÈME DE SÉCURITÉ ET PROCÉDÉ DE SÉCURISATION D'UNE MACHINE

(43) Veröffentlichungstag der Anmeldung: 10.12.2025
(73) Patentinhaber: SICK AG, 79183 Waldkirch (DE)
(72) Erfinder: Hammes, Dr. Markus, 79117 Freiburg (DE)

(56) Entgegenhaltungen:
- EP-A1- 3 709 106
- EP-A1- 4 325 308
- US-A1- 2022 189 274

## Beschreibung

Die Erfindung betrifft ein Sicherheitssystem und ein Verfahren zum Absichern einer Maschine nach dem Oberbegriff von Anspruch 1 beziehungsweise 13.

In der berührungslosen Überwachung zur Absicherung von Gefahren, etwa Maschinen im industriellen Umfeld oder Fahrzeuge in Logistikanwendungen, werden sehr häufig optoelektronische Sensoren eingesetzt. Gerade für komplexere Anwendungen sind hier vornehmlich ein Laserscanner und eine Kamera und insbesondere 3D-Kamera zu nennen. Eine 3D-Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet. 3D-Kameras gibt es in verschiedenen Technologien, darunter Lichtlaufzeit-, Stereoskopie- und Projektionsverfahren oder plenoptische Kameras. In einer noch etwas näher betrachteten Lichtlaufzeitkamera (TOF, Time of Flight) wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht.

Herkömmlich wird häufig ein Schutzfeld überwacht, das während des Betriebs der Maschine vom Bedienpersonal nicht betreten werden darf. Erkennt der Sensor einen unzulässigen Schutzfeldeingriff, etwa ein Bein einer Bedienperson, so wird die Maschine in einen sicheren Zustand überführt. Bekannt ist weiterhin die simultane Überwachung mehrerer Schutzfelder sowie eine Umschaltung von Schutzfeldern. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe.

Ein Sicherheitslaserscanner oder eine Sicherheitskamera, der oder die diesen Normen gerecht wird und für eine Schutzfeldauswertung ausgebildet ist, arbeitet intern mit sehr großen Informationsmengen der Scanpunktwolken oder Tiefenkarten. Es wird aber lediglich eine hoch verdichtete binäre Information sicher nach außen zur Verfügung gestellt, nämlich ob das Schutzfeld verletzt ist oder nicht. Dafür wird üblicherweise ein sicherer Ausgang genutzt (OSSD, Output Signal Switching Device). Komplexere sichere Auswertungen wie eine Positionsbestimmung eines Objekts oder eine Objektverfolgung sind herkömmlich nicht verfügbar. Zwar gibt es schon lange Algorithmen für eine Objektverfolgung mit optischer Erfassung, die auf klassischer Bildverarbeitung, Kalman-Filtern oder auch zunehmend künstlicher Intelligenz basieren. Für Risikominderungsfunktionen wäre auch die verlässliche Kenntnis der genauen Position von Personen und anderen Objekten deutlich wertvoller als nur das Wissen um die Anwesenheit eines Objekts in einem Schutzfeld. Es stehen aber keine geeigneten, für Anwendungen in der Sicherheitstechnik zertifizierten Produkte zur Verfügung. Etwas präziser gesagt liefern insbesondere heutige sichere 3D-Kamerasysteme durchaus 3D-Daten mit allen Informationen, die für eine Objektlokalisierung benötigt werden. Ausreichend performante Steuerungen oder sonstige Recheneinheiten entsprechen aber nicht den Sicherheitsanforderungen, während umgekehrt eine Sicherheitssteuerung nicht genug Rechenleistung mitbringt.

Die EP 3 470 879 A1 konfiguriert in einem Laserscanner mindestens teilweise einander überlappende Überwachungsfelder. Dadurch entstehen Überwachungssegmente, die sich voneinander dadurch unterscheiden, welche Überwachungsfelder dort überlappen. Die hardwareseitig vorgesehene Anzahl Überwachungsfelder wird so auf die Überwachungssegmente verfeinert.

Die EP 3 709 106 A1 schlägt ein Sicherheitssystem vor, das komplexe nicht sichere Auswertungen durch weniger komplexe sichere Auswertungen validiert.

In der DE 10 2017 105 174 B4 werden Trainingsdaten für ein künstliches neuronales Netz erzeugt. Bilddaten werden als sicherheitskritisch oder nicht sicherheitskritisch bewertet, je nachdem, ob ein sicherer Sensor zum Zeitpunkt der Aufnahme der Bilddaten eine sicherheitsgerichtete Absicherung auslöst oder nicht. Der sichere Sensor weist aber keine besonderen Eigenschaften hinsichtlich seiner Auswertung auf, die über eine Schutzfeldfunktion hinausgingen.

Die EP 4 325 308 A1 beschreibt ein Sicherheitssystem, in der Ergebnissignale einer jeweiligen Steuer- und Auswertungseinheit eines Sicherheitssensors und einer programmierbaren Steuerung miteinander verglichen werden. Das ist ein Quervergleich zweier gleichwertiger Funktionen, eine komplexere sichere Funktion wie eine Objektverfolgung wird so nicht ermöglicht.

Die nachveröffentlichte EP 4 431 787 A1 befasst sich mit einer Überwachungsvorrichtung zur sicheren Objektverfolgung. Dabei werden Schutzfelder mit Teilschutzfeldern konfiguriert, die eine diskrete Variante einer sicheren Objektverfolgung ermöglichen. Die Auflösung ist dadurch begrenzt, und es ist nicht möglich, mehrere Objekte simultan zu verfolgen.

Es ist daher Aufgabe der Erfindung, komplexere Sicherheitsfunktionen zu ermöglichen.

Diese Aufgabe wird durch ein Sicherheitssystem und ein Verfahren zum Absichern einer Maschine nach Anspruch 1 beziehungsweise 13 gelöst. Ein erster sicherer Sensor erfasst Sensordaten aus einer Umgebung der Maschine und überwacht anhand der Sensordaten mindestens ein Schutzfeld. Daraus ergibt sich ein sicheres Ausgangssignal an einer sicheren Schnittstelle des ersten Sensors (OSSD, Output Signal Switching Device), und der Zustand des Ausgangssignals gibt Auskunft, ob das Schutzfeld verletzt ist oder nicht, sich also darin ein unzulässiges Objekt befindet oder nicht. Eine Schutzfeldverletzung muss nicht zwangsläufig oder direkt in einer Sicherheitsreaktion der Maschine münden, das sichere Ausgangssignal kann anders verarbeitet werden. Der erste Sensor verfügt zudem über eine nicht sichere Schnittstelle zur Ausgabe von Sensordaten, beispielsweise zwei- oder dreidimensionale Bilddaten oder Punktwolken gegebenenfalls nach Vorverarbeitung.

Eine nicht sichere Auswertungseinheit, wie eine Standardsteuerung, ein Edge-Device oder ein Industrie-PC, empfängt die Sensordaten von der nicht sicheren Schnittstelle und bestimmt Objektpositionen in einer nicht sicheren Positionsauswertung oder Objektlokalisierung. Dabei sind komplexe Auswertungen möglich, die eine hohe Leistungsfähigkeit der nicht sicheren Auswertungseinheit fordern und die in einer verfügbaren zertifizierten Sicherheitssteuerung nicht geleistet werden könnten.

Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt oder jedenfalls nicht erforderlich, und demnach sind, isoliert für eine jeweilige nicht sichere Einheit oder Auswertung betrachtet, Diagnose- und Absicherungsmechanismen für die Erfüllung eines spezifizierten Sicherheitsniveaus nicht garantiert.

Die Erfindung geht von dem Grundgedanken aus, die originär nicht sichere Objektposition anhand der Schutzfeldüberwachung zu plausibilisieren oder zu überprüfen. Dadurch kann die Objektposition in einem Sicherheitskontext verwendet werden, insbesondere resultiert eine sichere Objektposition.

Die Erfindung hat den Vorteil, dass eine bereits als sicher zertifizierte Schutzfeldfunktion genutzt, in gewissem Sinne zweckentfremdet werden kann, um die Positionsauswertung zu prüfen. So kann mit vorhandenen sicheren Komponenten in einer einfachen und kostengünstigen Architektur durch einen Systemansatz mit Vergleichs- oder Diagnosemechanismen zur Laufzeit gemäß den Vorgaben einschlägiger Sicherheitsnormen die Objektposition für sicherheitstechnische Anwendungen nutzbar gemacht werden. Diese Prüfung kann mit verschiedenen Architekturen und Prüfungslogiken realisiert werden.

In der ersten sicheren Auswertungseinheit sind vorzugsweise eine Vielzahl von Schutzfeldern abgelegt, die gemeinsam ein Raster für mögliche Objektpositionen in dem Erfassungsbereich bilden. Das bedeutet, dass durch die Identität eines verletzten Schutzfeldes eine sichere Objektposition in der Auflösung des Rasters erfassbar wird. Das Raster kann in beliebigen Koordinaten angelegt sein, beispielsweise Kreisringe für Polarkoordinaten, und/oder unregelmäßig sein, etwa umso dichter bei zunehmender Nähe zu der Maschine. Eine Verfeinerung des Rasters kann durch eine Art Fingerabdruck sich überlagernder Schutzfelder erreicht werden, wie in der einleitend genannten EP 3 470 879 A1 beschrieben. Die Schutzfelder sind in einem eigenen Speicher der sicheren Auswertungseinheit oder einem Speicher des Sensors abgelegt, auf den sie Zugriff hat. Dabei können Schutzfelder vorkonfiguriert und/oder dynamisch erzeugt oder angepasst sein.

Vorzugsweise spart je Objektposition in dem Raster ein Schutzfeld diese Objektposition aus. Das ist eine besondere Art und Weise, das Raster zu bilden. Bildlich gesprochen hat das Schutzfeld gerade an der Objektposition ein Loch, und zwar von der Größe einer Person oder des gemäß Detektionsvermögens zu erkennenden Körperteils plus eine mögliche Toleranz oder Marge, insbesondere berechnet nach den einschlägigen Sicherheitsnormen. Mit solchen Schutzfeldern wird eine Objektposition dadurch codiert, dass das diese Objektposition aussparende Schutzfeld gerade nicht verletzt ist. Im Rahmen einer Objektverfolgung kann dies auch von dem Fall unterschieden werden, dass es gar kein Objekt im Erfassungsbereich gibt. Alternativ kann für diese Unterscheidung simultan ein weiteres Schutzfeld aktiv sein, das auch den ausgesparten Bereich umfasst, beispielsweise den gesamten Erfassungsbereich abdeckt.

Die nicht sichere Auswertungseinheit ist bevorzugt dafür ausgebildet, fortlaufend anhand einer jeweiligen Objektposition ein Schutzfeld auszuwählen, das von einem Objekt an dieser Objektposition nicht verletzt wird. Die Schutzfelder weichen damit gleichsam vor dem Objekt zurück. Tatsächlich geschieht die Anpassung vorzugsweise durch Umschaltung auf ein Schutzfeld einer anderen Geometrie, insbesondere mit einer Aussparung an der Objektposition wie im Vorabsatz. Ein Fehler der nicht sicheren Positionsauswertung wird dann in sicherer Weise dadurch aufgedeckt, dass das Schutzfeld doch verletzt ist, weil sich das Objekt nicht an der erwarteten Objektposition befindet.

Die nicht sichere Auswertungseinheit ist bevorzugt dafür ausgebildet, fortlaufend anhand einer jeweiligen Objektposition ein Schutzfeld auszuwählen, das von einem Objekt an dieser Objektposition verletzt wird. Damit wird die Logik gleichsam invertiert, die Schutzfelder weichen nicht vor dem Objekt zurück, sondern wandern mit dem Objekt an der erwarteten Objektposition mit. Die Erwartungshaltung für eine korrekte Positionsauswertung ist nun, dass das Schutzfeld ständig verletzt ist.

Die nicht sichere Auswertungseinheit ist bevorzugt dafür ausgebildet, fortlaufend anhand einer jeweiligen Objektposition einen Mutingbereich auszuwählen. Das ist eine dritte Alternative zu ausweichenden und mitwandernden Schutzfeldern. Ein Mutingbereich ist im Prinzip auch eine Aussparung in einem Schutzfeld, nur dass dies anders implementiert ist, nämlich nicht durch die Geometrie des Schutzfeldes, sondern eben ein Muting oder Stummschalten eines Schutzfeldes im Bereich der Aussparung, wobei nun der Mutingbereich mit der erwarteten Objektposition mitwandert.

Das Sicherheitssystem weist bevorzugt eine Sicherheitssteuerung auf, die die Objektposition mit einem Ergebnis der Überwachung des mindestens einen Schutzfeldes vergleicht. Für die vorherigen Varianten ist dagegen keine Sicherheitssteuerung erforderlich. In dieser Ausführungsform ergänzt die Sicherheitssteuerung mit ihrer Diagnosefunktion die performante nicht sichere Auswertungseinheit mit deren Positionsauswertung. Mit Sicherheitssteuerung ist eine sichere Auswertungseinheit gemeint, die in beliebiger Hardware realisiert ist, insbesondere eine Sicherheitssteuerung als für Sicherheitsanwendungen zugelassene Steuerung im engeren Sinne.

Die nicht sichere Auswertungseinheit ist bevorzugt dafür ausgebildet, anhand der Objektposition vorherzusagen, welches Schutzfeld verletzt ist, und diese Vorhersage an die Sicherheitssteuerung zu übermitteln. Dort in der Sicherheitssteuerung kann dann die Vorhersage verletzter Schutzfelder mit den tatsächlich verletzten Schutzfeldern verglichen werden, wobei sich eine Übereinstimmung nur ergeben wird, wenn die Positionsauswertung die richtige Objektposition bestimmt hat.

Das Sicherheitssystem weist bevorzugt einen zweiten sicheren Sensor zum Erfassen von Sensordaten aus einer Umgebung der Maschine auf, der eine zweite sichere Auswertungseinheit zur Überwachung mindestens eines Schutzfeldes durch eine sichere Schutzfeldauswertung seiner Sensordaten, eine zweite sichere Schnittstelle zur Ausgabe eines Ergebnisses der Überwachung des mindestens einen Schutzfeldes und eine zweite nicht sichere Schnittstelle zur Ausgabe von Sensordaten an die nicht sichere Auswertungseinheit aufweist. Durch den Einsatz von zwei oder noch mehr Sensoren kann mittels Redundanz oder, im Fall nicht baugleicher Sensoren, sogar diversitäre Redundanz ein höheres Sicherheitsniveau erreicht werden.

Das Sicherheitssystem ist bevorzugt dafür ausgebildet, die Objektpositionen aus Sensordaten des ersten Sensors anhand der Überwachung des mindestens einen Schutzfeldes des zweiten Sensors und/oder die Objektpositionen aus Sensordaten des zweiten Sensors anhand der Überwachung des mindestens einen Schutzfeldes des ersten Sensors zu plausibilisieren. Damit erfolgt die Plausibilisierung zwischen den beiden Sensoren mit deren Schutzfeldüberwachung und den Positionsauswertungen aus den jeweiligen Sensordaten überkreuz. Es sind Plausibilisierungen gemäß allen für nur einen Sensor beschriebenen Ausführungsformen möglich, also insbesondere durch Zurückweichen von Schutzfeldern oder Mitbewegen von Schutzfeldern oder Mutingbereichen anhand der Objektposition. Insbesondere ist ein Vergleich von vorhergesagten und tatsächlichen Schutzfeldverletzungen in einer Sicherheitssteuerung denkbar, wiederum überkreuz.

Die nicht sichere Auswertungseinheit ist besonders bevorzugt dafür ausgebildet, eine Objektverfolgung von Objekten in dem Erfassungsbereich durchzuführen. Es werden also nicht nur jeweils die aktuellen Objekte erkannt, sondern diese über die Zeit verfolgt. Das ist wesentlich verlässlicher und ermöglicht feiner abgestimmte Sicherheitskonzepte. Beispielsweise können Objekte nicht mitten im Erfassungsbereich erscheinen oder verschwinden, und aus einer Objektbewegung lässt sich eine viel differenziertere Sicherheitsreaktion der Maschine ableiten als aus einer bloßen momentanen Objektposition. Die momentane Objektposition ist aber jedenfalls mit umfasst, eine Objektverfolgung also auch eine Form der Positionsauswertung. Algorithmen sind an sich bekannt, beispielsweise auf Basis von Kalman-Filtern oder maschinellem Lernen, insbesondere neuronalen Netzen. Die Besonderheit ist, dass dank der Erfindung trotz der anfänglich nicht sicheren Objektverfolgung aufgrund der Plausibilisierung eine sichere Objektverfolgung erreicht werden kann.

Der erste sichere Sensor ist bevorzugt eine 3D-Kamera, insbesondere eine Lichtlaufzeitkamera. So werden hochwertige Sensordaten erzeugt, die komplexe Auswertungen in der nicht sicheren Auswertungseinheit ermöglichen. Falls es weitere Sensoren gibt, gilt das für diese Sensoren ebenso, wobei eine Kombination baugleicher Sensoren, Sensoren nach dem gleichen Sensorprinzip oder gezielt unterschiedliche Sensoren denkbar sind.

Das Sicherheitssystem ist bevorzugt dafür ausgebildet, Sensordaten mit einer zugehörigen Objektposition und/oder einem Ergebnis der Schutzfeldauswertung als annotierte Trainingsdaten zu speichern oder auszugeben, insbesondere jeweils ausgelöst durch eine erfolgreiche Plausibilisierung, eine Schutzfeldverletzung und/oder eine beendete Schutzfeldverletzung. Durch die Positionsauswertung beziehungsweise Schutzfeldüberwachung werden jeweiligen Sensordaten automatisch wichtige Informationen über die gegenwärtig im Erfassungsbereich befindlichen Objekte zugeordnet. Das wird in diese Ausführungsform dazu genutzt, um die Sensordaten und automatisch zu annotieren.

Dadurch werden hochwertige Trainingsdaten gewonnen, und das sonst erforderliche mühsame händische Annotieren oder Labeling entfällt. Beispiele für Labels sind Objektpositionen, Objektlisten, bisherige und/oder künftige Objektbahnen, verletzte und nicht verletzte Schutzfelder sowie eine binäre Gesamtbewertung, ob die gegenwärtige Situation eine Sicherheitsreaktion wegen eines drohenden Unfalls erfordert oder nicht. Trainingsdaten können periodisch oder in jedem sonstigen Zeitraster, auf Anforderung oder durch bestimmte Situationen getriggert erzeugt werden. Ein interessanter Trigger ist eine erfolgreiche Plausibilisierung, die sicherstellt, dass die Labels korrekt sind, und/oder wenn ein Schutzfeld verletzt wird oder nicht mehr verletzt ist, weil dann mit erhöhter Wahrscheinlichkeit etwas Interessantes im Umfeld der Maschine passiert ist, auf das das zu trainierende Verfahren besonders trennscharf reagieren sollte.

Das Sicherheitssystem löst bevorzugt eine Sicherheitsreaktion der Maschine aus, wenn sich ein Objekt an einer gefährlichen Position und/oder in einer gefährlichen Bewegung befindet. Obwohl nicht ausgeschlossen ist, dass Schutzfeldverletzungen in diese Gefährdungsbeurteilung einfließen, ist der eigentliche Vorteil der Erfindung, dass die Schutzfeldüberwachung nur indirekt beiträgt, weil sie für sichere Objektpositionen sorgt. Vorzugsweise erfolgt dann die Gefährdungsbeurteilung selbst anhand der Ergebnisse der Positionsauswertung. Eine gefährliche Position kann zu nahe an einer Maschine oder einem Maschinenteil sein, mit möglichen Zeitabhängigkeiten oder der Berücksichtigung von Arbeitsabläufen der Maschine. Bewegungen ermöglichen zusätzliche Bewertungen, denn beispielsweise ist eine Bewegung parallel zu der Maschine oder sogar mit einer Teilkomponente davon weg unkritischer als direkt auf die Maschine zu. Auch die Geschwindigkeit kann eine Rolle spielen (Speed-and-Separation-Monitoring). Die Absicherung kann in einem Ausweichen, Verlangsamen oder Anhalten der Maschine oder dem Einnehmen eines sonstigen sicheren Zustands bestehen.

Das Sicherheitssystem ist bevorzugt als sicherer Personenzähler ausgebildet. Es werden Objekte sicher erfasst und anhand ihre Objektposition unterschieden. Somit kann insbesondere sehr einfach gezählt werden, wie viele Objekte sich im Erfassungsbereich befinden. Wenn eine Schutzfeldverletzung nur durch Objekte von der Größe von Personen ausgelöst werden, ergibt sich bereits hieraus, dass Personen von Objekten unterschieden sind. Zudem kann in der nicht sicheren Auswertungseinheit ein beliebig kompliziertes Personenmodell geprüft werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer 3D-Kamera;
- Fig. 2: eine beispielhafte Aufnahme einer Szene mit Personen, überwachter Maschine und konfigurierten Schutzfeldern;
- Fig. 3: eine Darstellung einer Sicherheitsarchitektur mit einem sicheren Sensor und einer nicht sicheren Steuerung;
- Fig. 4: eine Darstellung einer Sicherheitsarchitektur mit einem sicheren Sensor, einer nicht sicheren Steuerung und einer Sicherheitssteuerung;
- Fig. 5: eine Darstellung einer Sicherheitsarchitektur mit zwei sicheren Sensoren und einer nicht sicheren Steuerung; und
- Fig. 6: eine Darstellung einer Sicherheitsarchitektur mit zwei sicheren Sensoren, einer nicht sicheren Steuerung und einer Sicherheitssteuerung.

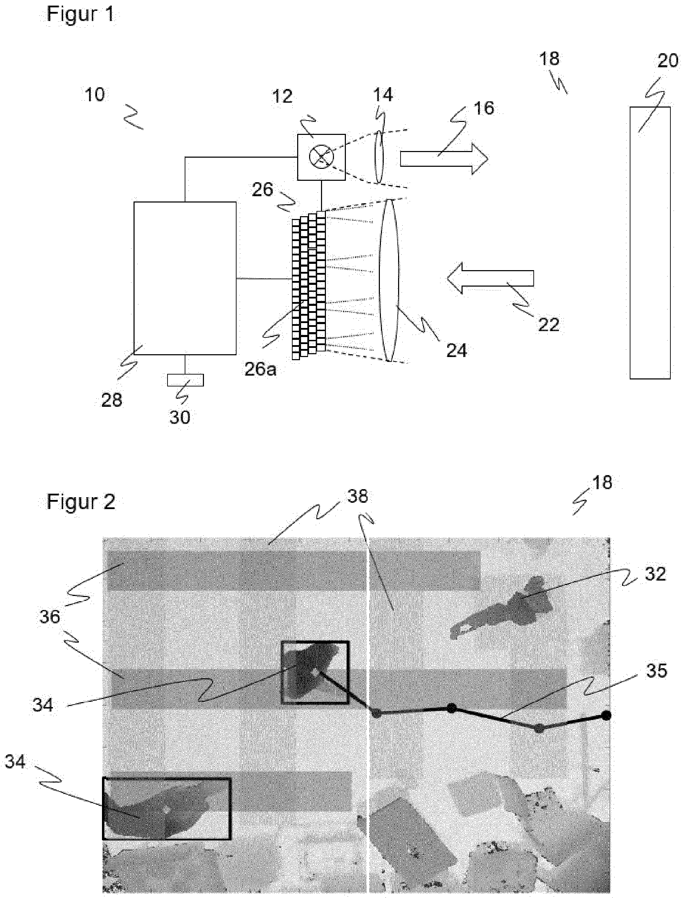

Figur 1 zeigt eine schematische Blockdarstellung einer Kamera 10, die vorzugsweise als 3D-Lichtlaufzeitkamera ausgebildet ist und die stellvertretend für einen optoelektronischen Sensor beschrieben wird, der im Zusammenhang mit der Erfindung eingesetzt werden kann. Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 18 in dem Erfassungsbereich 18 auf ein Objekt 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen. Darin findet eine Demodulation entsprechend einem Lock-In-Verfahren statt. Durch wiederholte Erfassung mit über die Wiederholungen jeweils geringfügig versetzter Modulation des Sendelichts 16 werden mehrere Abtastwerte erzeugt, aus denen sich letztlich die Phasenverschiebung zwischen Sendelicht 16 und Empfangslicht 22 und damit die Lichtlaufzeit messen lässt. Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

In einer Steuer- und Auswertungseinheit 28 mit mindestens einem digitalen Rechenbaustein wie einem Mikroprozessor oder dergleichen werden die Bilddaten für eine Schutzfeldüberwachung verwendet. Die Steuer- und Auswertungseinheit 28 weist mindestens eine Auswertungsschaltung und vorzugsweise mindestens einen digitalen Rechenbaustein auf, wie eine Mikroprozessor oder eine CPU (Central Processing Unit), ein FPGA (Field Programmable Gate Array), ein DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Ein Schutzfeld kann über geometrische Vorgaben für einen Teilbereich des Erfassungsbereichs 18 definiert werden, die beispielsweise in einem CAD-Programm oder auf beliebig andere Weise mittels der Steuer- und Auswertungseinheit 28 konfiguriert oder über eine nicht gezeigte Schnittstelle eingespielt werden. Die Schutzfelder werden auf Objekteingriffe überwacht, und bei einer Schutzfeldverletzung wird an einem dem Schutzfeld zugeordneten sicheren Ausgang 30 ein sicheres Ausgangssignal ausgegeben. Der Zustand des sicheren Ausgangs reflektiert demnach binär die Anwesenheit oder Abwesenheit eines Objekts im zugehörigen Schutzfeld.

Figur 2 zeigt eine beispielhafte Aufnahme der Kamera 10 mit einigen Auswertungsergebnissen. Die Tiefenwerte sind nur durch Grauwerte angedeutet. Wie später noch genauer erläutert, findet sowohl eine Schutzfeldüberwachung als auch eine Positionsauswertung oder Objektlokalisierung, vorzugsweise Objektverfolgung statt. Im Umfeld einer überwachten Maschine 32 sind zwei Personen 34 erkannt und umrahmt (Bounding Box), wobei von einer Person 34 die von der Objektverfolgung erkannte vergangene Bewegungsbahn 35 hervorgehoben ist. Ferner sind überwachte Schutzfelder 36, 38 eingezeichnet, die einander zu einem Raster überlappen, in dem es Teilbereiche oder Rasterelemente gibt, die von den Schutzfeldern 36, 38 abgedeckt und andere, die von den Schutzfeldern 36, 38 ausgelassen sind. Im Übrigen können die einzelnen gezeigten Streifen sowohl separate Schutzfelder als auch zueinander beabstandete Teilschutzfelder eines gemeinsamen Schutzfeldes sein. Die Schutzfeldgeometrien sind rein beispielhaft zu verstehen, es kann insbesondere ein feineres, unregelmäßiges oder nicht orthogonales Raster gebildet werden. Ferner ist möglich, dass zwischen Schutzfeldern umgeschaltet wird oder diese dynamisch angepasst werden.

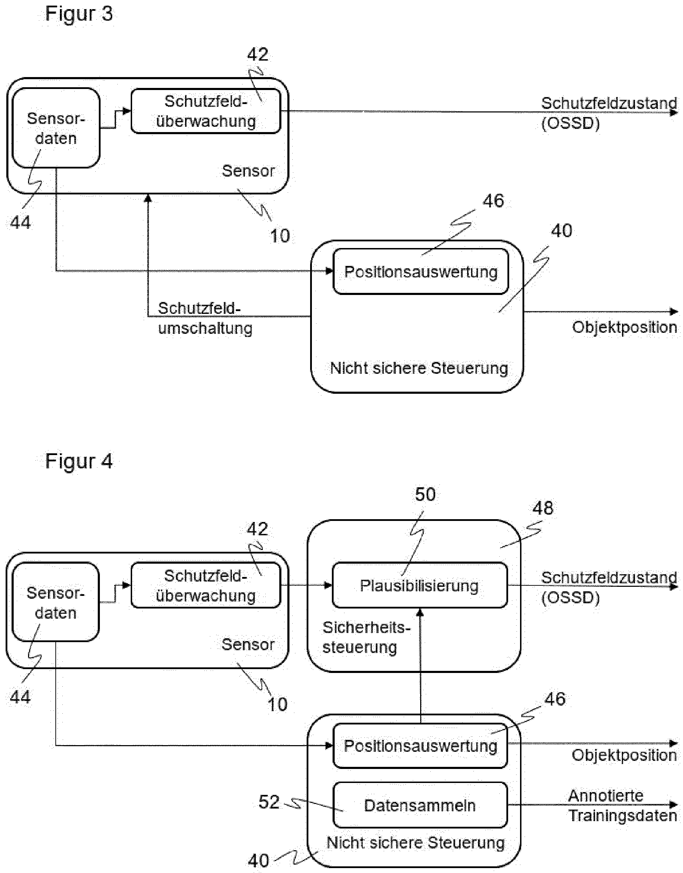

Figur 3 zeigt eine Darstellung einer Sicherheitsarchitektur mit einem sicheren Sensor 10 und einer nicht sicheren Steuerung 40 zur Erläuterung eines Testkonzepts in einer Ausführungsform der Erfindung. Als sicherer Sensor 10 ist vorzugsweise die Kamera 10 gemäß Figur 1 eingesetzt, und deshalb wird weiter das gleiche Bezugszeichen verwendet. Alternativ kann ein anderer 3D-Sensor eingesetzt werden, einleitend sind einige Arten von 3D-Kameras genannt, eine weitere Möglichkeit ist ein mehrlagiger Laserscanner oder ein Laserscanner mit variabler Abtastebene. Ferner sind zweidimensionale Kameras oder Laserscanner denkbar, oder ganz andere Sensorprinzipien wie ein Radar.

Der sichere Sensor 10 als Ganzes ist ein sichere Sensor im einleitend definierten Sinne, erfüllt also ein wohldefiniertes Sicherheitsniveau insbesondere aus einer Sicherheitsnorm für Kameras, Maschinensicherheit, berührungslos wirkende Schutzeinrichtungen. In dem sicheren Sensor 10 sind als Funktionsblöcke die schon mehrfach angesprochene Schutzfeldüberwachung 42 sowie die erzeugten Sensordaten 44 vorgesehen. Die Schutzfeldüberwachung 42 ist eine sichere Auswertung, ein äußerer Zugriff auf die Sensordaten 44 selbst mit Weitergabe an die nicht sichere Steuerung 40 hingegen ist nicht sicher. Der sichere Sensor 10 ist demnach mit anderen Worten ein zertifizierter Sicherheitssensor mit Schutzfeldfunktion und einer nicht-sicheren Datenschnittstelle für die Ausgabe der Sensordaten.

Bei der nicht sicheren Steuerung 40 handelt es sich beispielsweise um einen Industrie-PC, ein Edge Device oder eine Computerbox wie Nvidia Jetson. Wichtig ist, dass hier genug Rechen- und Speicherkapazitäten sowie Datenbandbreiten bereitstehen, um komplexere Auswertungen der Sensordaten 44 in einer Positionsauswertung 46 der nicht sicheren Steuerung zu ermöglichen, wobei die Positionsauswertung 46 vorzugsweise eine Objektverfolgung leistet. Die Positionsauswertung 46 liefert beispielsweise sogenannte Objektlisten, die Informationen wie alle erfassten Objekte, deren Positionen, IDs, Bounding Boxen und ähnliche Daten enthalten können.

Die Grundidee der Erfindung ist, die Positionsauswertung 46 anhand der Schutzfeldüberwachung 42 zu plausibilisieren, um auf diese Weise Fehlerfälle der Positionsauswertung 46 mit für das angestrebte Sicherheitsniveau ausreichend hoher Wahrscheinlichkeit aufzudecken. In der Ausführungsform gemäß Figur 3 ist das dadurch realisiert, dass der sichere Sensor 10 über unterschiedliche Schutzfeldkonfigurationen verfügt, die wechselseitig unterschiedliche Bereiche im Erfassungsbereich 18 mit Schutzfeldern 36, 38 abdecken. Insbesondere gibt es für jeden Bereich ein Schutzfeld 36, 38, das diesen Bereich ausspart. In der nicht sicheren Steuerung 40 wird aus den Ergebnissen der Positionsauswertung 46 abgeleitet, welche Schutzfeldkonfiguration angewählt werden muss, damit es bei der gefundenen Objektposition nicht zu einer Schutzfeldauslösung kommt.

Wenn sich eine Person 34 durch den Erfassungsbereich 18 bewegt, dann wird bei ordnungsgemäßem Ablauf der Positionsauswertung 46 dynamisch immer eine Schutzfeldkonfiguration so gewählt, dass kein Schutzfeld 36, 38 verletzt wird. Die Schutzfelder 36, 38 weichen in diesem Konzept quasi vor der Person 34 zurück, der Schutzfeldzustand (OSSD) bleibt ständig "ON". In einer invertierten Logik können umgekehrt Schutzfelder 36, 38 gewählt werden, die in jeder aktuellen Objektposition verletzt sind, also mit der Person 34 mitwandern, wobei dann der Schutzfeldzustand (OSSD) ständig "OFF" bleibt. Als weitere Alternative kann ein Zurückweichen von Schutzfeldern 36, 38 durch einen mit der Person 34 mitwandernden Mutingbereich realisiert werden. Schutzfelder 36, 38 werden dabei an der jeweiligen Objektposition überbrückt, so dass das Schutzfeld 36, 38 trotz Anwesenheit der Person 34 nicht als verletzt erkannt wird.

Im Ergebnis wird so neben dem Schutzfeldzustand eine Objektposition gewonnen, die dank der Plausibilisierung für eine nachgeordnete sicherheitsrelevante Gefährdungsbeurteilung genutzt werden darf. Im Rahmen einer Objektverfolgung können weitere Werte wie Geschwindigkeit, frühere oder prognostizierte Objektpositionen und dergleichen gewonnen werden. Wird eine Gefahr erkannt, so wird ein sicherheitsgerichtetes Signal an die überwachte Maschine 32 ausgegeben. Die Maschine 32 wird daraufhin langsamer oder weicht auf Arbeitsschritte aus, die zumindest bei dieser erkannten Objektbewegung nicht gefährden können, und nur notfalls wird die Maschine in einen sicheren Zustand überführt. Damit wird insgesamt eine hohe Verfügbarkeit und Produktivität erzielt. Die im Vergleich zu einer bloßen Schutzfeldüberwachung höherwertigen Ergebnisse der Positionsauswertung 46 oder Objektverfolgung, insbesondere Kenntnis der Positionen aller anwesenden Personen, können zudem in zukünftigen Absicherungslösungen eingesetzt werden, die auf übergeordneter Ebene Einfluss auf die automatischen Prozesse in einem größeren Bereich bis hin zu einer ganzen Halle oder Fabrik nehmen.

Figur 4 zeigt eine Darstellung einer Sicherheitsarchitektur mit einem sicheren Sensor 10, einer nicht sicheren Steuerung 40 und nun in dieser Ausführungsform zusätzlich einer Sicherheitssteuerung 48, wobei letzteres zunächst allgemein als sichere Auswertung einer Recheneinheit in beliebiger Hardware und nur vorzugsweise als Sicherheitssteuerung im engeren Sinne zu verstehen ist. In der nicht sicheren Steuerung 40 werden nun zusätzlich zu der Positionsauswertung 46 die passenden Schutzfeldzustände bestimmt und an eine Plausibilisierung 50 in der Sicherheitssteuerung 48 übermittelt. Dazu werden die Geometrien für die Schutzfeldüberwachung 42 auch der nicht sicheren Steuerung 40 mitgeteilt, vorzugsweise bei der Einrichtung.

Damit kann die Plausibilisierung 50 die von der nicht sicheren Steuerung anhand der dort ermittelten Objektposition vorhergesagten Schutzfeldzustände mit den tatsächlichen Schutzfeldzuständen der Schutzfeldüberwachung 42 vergleichen. Es ist zur Bestätigung der korrekten Funktion der Positionsauswertung 46 nicht zwingend erforderlich, dass zu jedem Zeitpunkt eine völlige Übereinstimmung vorliegt, da die Schutzfeldüberwachung 42 den Schutzfeldstatus auf Basis einer Einzelpixelinformationen bestimmt, während die Positionsauswertung 46 mit Modellannahmen wie Schwerpunkten und vorgegebenen Radien oder Bounding Boxen arbeitet. Gerade für einen Rand eines Schutzfeldes 36, 38 sollten daher Toleranzen in dem Vergleich der Plausibilisierung 50 zugelassen werden, insbesondere anhand von Korrelationsmaßen in einem zeitlichen OSSD-Verlauf. Nur im Falle einer erfolgreichen Plausibilisierung können die Ergebnisse der Positionsauswertung 46 in einer nachgeordneten Gefährdungsbeurteilung verwendet werden.

Figur 4 zeigt noch eine weitere optionale Funktion der nicht sicheren Steuerung 40, die auch in allen anderen Ausführungsformen zum Einsatz kommen kann, nämlich ein Datensammeln für das Speichern oder Bereitstellen von annotierten Trainingsdaten. Dabei sind die Trainingsdaten die Sensordaten, denen als zugehöriges Label automatisch ein Ergebnis der Schutzfeldüberwachung 42 und/oder Positionsauswertung zugeordnet wird. Solche Trainingsdaten können dann für das Training eines Verfahrens des maschinellen Lernens beziehungsweise ein Kl-Modell (künstliche Intelligenz) oder ein neuronales Netz verwendet werden. Nach erfolgreichem Training ist ein solches Verfahren in der Lage, die ursprüngliche Funktion nachzuahmen, auch an anderem Ort und in andere Anwendung, oder in der Sicherheitsanwendung zu übernehmen oder zu ergänzen. Damit die Trainingsdaten relevant und nicht womöglich irreführend annotiert sind, können sie jeweils nur auf einen Trigger hin erzeugt werden. Dafür eignet sich insbesondere eine jeweilige erfolgreiche Plausibilisierung 50, denn damit ist klar, dass in diesem Moment die Sensordaten korrekt bewertet sind und demnach auch korrekt gelabelt werden. Es können zusätzliche Bedingungen gestellt werden, etwas dass Trainingsdaten nur nach einer Mindestveränderung der Objektposition, bei bestimmten Schutzfeldzuständen oder einer Gesamtbewertung der Situation als gefährlich oder ungefährlich erzeugt werden.

Durch das beschriebene Vorgehen und die Plausibilisierung lassen sich die relevanten Fehlerszenarien zuverlässig aufdecken und beherrschen:
- Bei einem vollständigen Ausfall der Positionsauswertung 46 bleiben das Erwartungssignal für Schutzfeldverletzungen, das Mutingsignal beziehungsweise die dynamische Umschaltung der Schutzfelder 36, 38 aus. Dementsprechend wird keine Übereinstimmung bei der Plausibilisierung 50 festgestellt, oder das nicht umgeschaltete Schutzfeld 36, 38 wird verletzt und diese Verletzung in der Schutzfeldüberwachung 42 erkannt.
- Bei einer verzögerten Ausführung oder einem Einfrieren der Positionsauswertung 46 treffen Erwartungssignal, Mutingsignal beziehungsweise dynamische Umschaltung verspätet oder gar nicht ein, mit der gleichen Konsequenz.
- Bei einer fehlerhaften Lokalisierung der Objekte in der Positionsauswertung 46 passen Erwartungssignal, Mutingsignal beziehungsweise dynamische Umschaltung nicht zur tatsächlichen Objektposition, wiederum mit der gleichen Konsequenz.
- Bei einer fehlerhafte Datenübertragung der Sensordaten an die nicht sichere Steuerung 40 sind die Fehler entweder nur geringfügig und erzeugen damit keine relevante Fehlfunktion, oder es ergibt sich die gleiche Konsequenz wie in den anderen Fehlerfällen.
- Gegen eine fehlerhafte Datenübertragung der Ergebnisse der nicht sicheren Steuerung 40 an eine nachgelagerte Einheit, wie Objektpositionen, Objektlisten und dergleichen, sind vorzugsweise noch zusätzliche Maßnahmen ergriffen, wie Prüfsummen, Zeitstempel und Paket-IDs. Alternativ können in einer Ausführungsform mit Sicherheitssteuerung 48 Plausibilisierungselemente für die Datenübertragung über den unabhängigen Plausibilisierungskanal der Sicherheitssteuerung 48 übertragen werden. Gerade wenn hier ein sicherer Feldbus verwendet wird, können redundante Informationen oder zusätzliche Validierungselemente in die Übertragung aufgenommen werden.

Bei Anwesenheit mehrerer Personen 34 im Erfassungsbereich 18 gibt es in manchen Situationen keine Möglichkeit, für alle Personen 34 freie Bereiche zu konfigurieren, ohne die Schutzfelder 36, 38 komplett zu deaktivieren. Dieser Zustand wäre aber in sicherheitstechnischer Hinsicht problematisch und wird deshalb vorzugsweise gar nicht zugelassen. Das Problem lässt sich bis zu einem gewissen Grad mit simultan überwachten Schutzfeldern 36, 38 entschärfen, wobei es Grenzen gibt, wenn die Personenzahl im Erfassungsbereich 18 zu groß wird. Das bedeutet aber nur, dass die Maschine 32 nicht verfügbar ist, solange sich zu viele Personen 34 in ihrem Umfeld aufhalten.

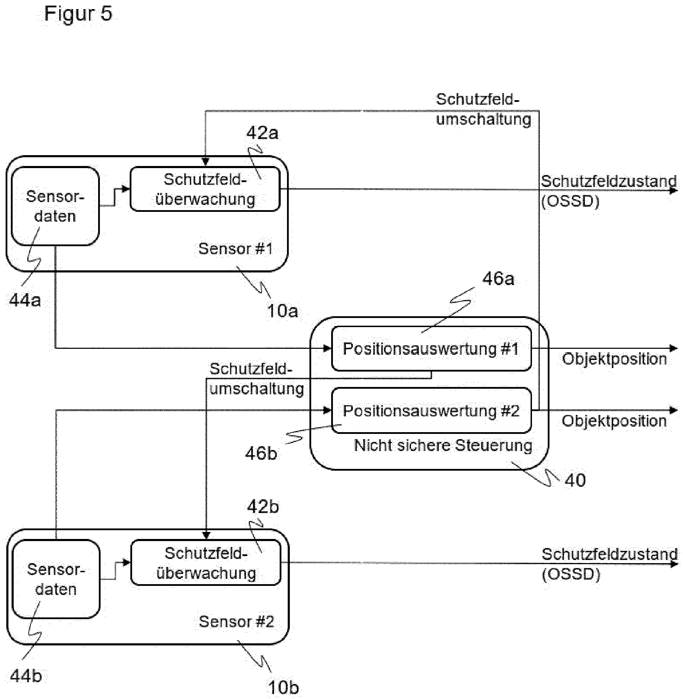

Figur 5 zeigt eine Darstellung einer Sicherheitsarchitektur mit zwei sicheren Sensoren 10a-b und einer nicht sicheren Steuerung 40 in einer weiteren Ausführungsform der Erfindung. In den bisherigen Ausführungsformen mit nur einem sicheren Sensor 10 können Fehler gemeinsamer Ursache (common cause failures) auftreten, die beide Systemkanäle betreffen. Der sichere Sensor 10 ist aufgrund seiner Sicherheitseignung zwar bis zu einem gewissen Grad robust gegen solche Fehler, aber die Limitierungen der Einzelkomponente stellen in jedem Fall auch eine Limitierung des Gesamtsystems dar. Insbesondere wird so das Sicherheitsniveau der Systemfunktion auf das Sicherheitsniveau des einzelnen sicheren Sensors 10 begrenzt.

In einer Erweiterung des Konzepts mit zwei sicheren Sensoren 10a-b kann eine Plausibilisierung durch den jeweils anderen sicheren Sensor 10b-a mit dessen unabhängigen Datengrundlage, ausführenden Hardware und Perspektive erfolgen. Die Diversität dieses Ansatzes macht sicherheitsrelevante Fehlerfälle extrem unwahrscheinlich und erlaubt es so, höhere Sicherheitsniveaus für die Gesamtlösung zu beanspruchen.

In der Ausführungsform gemäß Figur 5 werden die Sensordaten des ersten Sensors 10a in einer ersten Positionsauswertung 46a verarbeitet und davon Schutzfeldumschaltungen für die zweite Schutzfeldüberwachung 42b in dem zweiten sicheren Sensor 10b ausgelöst. Umgekehrt werden die Sensordaten des zweiten sicheren Sensors 10b in einer zweiten Positionsauswertung 46b verarbeitet und davon Schutzfeldumschaltungen für die erste Schutzfeldüberwachung 42a in dem ersten sicheren Sensor 10a ausgelöst. Diese Ausführungsform kommt ohne Sicherheitssteuerung aus.

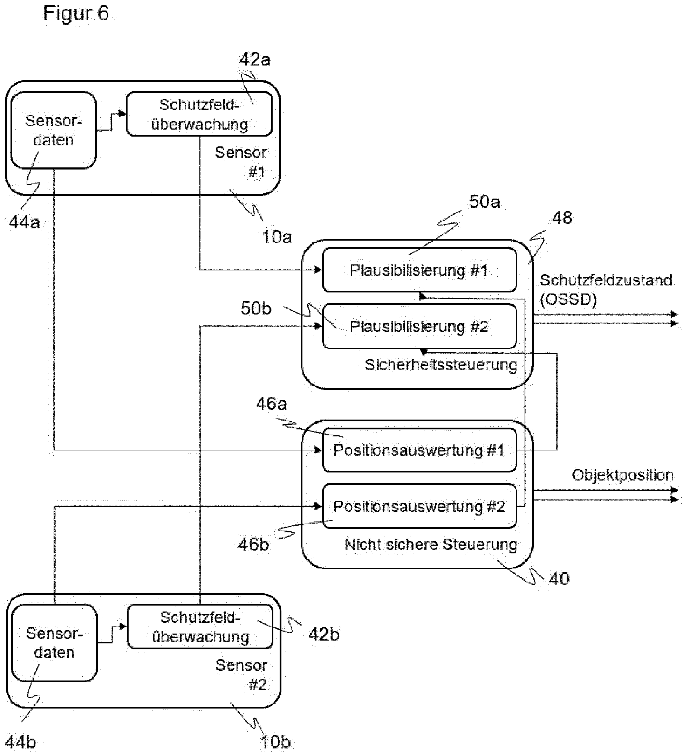

Figur 6 zeigt eine Darstellung einer Sicherheitsarchitektur mit zwei sicheren Sensoren 10a-b, einer nicht sicheren Steuerung 40 und in dieser weiteren Ausführungsform im Unterschied zu Figur 5 einer zusätzlichen Sicherheitssteuerung 48. Die Ergebnisse der beiden Positionsauswertungen 46a-b werden in einer ersten und zweiten Plausibilisierung 50a-b überkreuz mit den Ergebnissen der Schutzfeldüberwachungen 42b-a des jeweils anderen sicheren Sensors 10b-a plausibilisiert. Dieses System kann in nochmals deutlich größerem Umfang Diversität für die Sicherheitsbetrachtung beanspruchen.

## Patentansprüche

1. Sicherheitssystem zum Absichern einer Maschine (32), wobei das Sicherheitssystem mindestens einen ersten sicheren Sensor (10) zum Erfassen von Sensordaten (44) aus einem Erfassungsbereich (18) in einer Umgebung der Maschine (32) und eine nicht sichere Auswertungseinheit (40) aufweist, wobei der erste sichere Sensor (10) eine erste sichere Auswertungseinheit (28) zur Überwachung mindestens eines Schutzfeldes (36, 38) durch eine sichere Schutzfeldauswertung (42) der Sensordaten (44), eine erste sichere Schnittstelle (30) zur Ausgabe eines Ergebnisses der Überwachung des Schutzfeldes (36, 38) und eine erste nicht sichere Schnittstelle zur Ausgabe von Sensordaten (44) an die nicht sichere Auswertungseinheit (40) aufweist, wobei die nicht sichere Auswertungseinheit (40) dafür ausgebildet ist, durch eine nicht sichere Positionsauswertung (46) der Sensordaten (44) Objektpositionen von in dem Erfassungsbereich (18) befindlichen Objekten (20, 34) zu bestimmen, und wobei das Sicherheitssystem weiterhin dafür ausgebildet ist, die Objektpositionen anhand der Überwachung des mindestens einen Schutzfeldes (36, 38) zu plausibilisieren,
**dadurch gekennzeichnet,**
**dass** die nicht sichere Auswertungseinheit (40) dafür ausgebildet ist, fortlaufend anhand einer jeweiligen Objektposition ein Schutzfeld (36, 38) auszuwählen, das von einem Objekt (20, 34) an dieser Objektposition nicht verletzt wird, so dass die Schutzfelder gleichsam vor dem Objekt zurückweichen,
oder fortlaufend anhand einer jeweiligen Objektposition ein Schutzfeld (36, 38) auszuwählen, das von einem Objekt (20, 34) an dieser Objektposition verletzt wird, so dass die Schutzfelder in einer gleichsam invertierten Logik mit dem Objekt an einer erwarteten Objektposition mitwandern,
oder fortlaufend anhand einer jeweiligen Objektposition einen Mutingbereich auszuwählen, so dass der Mutingbereich mit der erwarteten Objektposition mitwandert.

2. Sicherheitssystem nach Anspruch 1,
wobei in der ersten sicheren Auswertungseinheit (28) eine Vielzahl von Schutzfeldern (36, 38) abgelegt sind, die gemeinsam ein Raster für mögliche Objektpositionen in dem Erfassungsbereich (18) bilden.

3. Sicherheitssystem nach Anspruch 2,
wobei je Objektposition in dem Raster ein Schutzfeld (36, 38) diese Objektposition ausspart.

4. Sicherheitssystem nach einem der vorherigen Ansprüche,
das eine Sicherheitssteuerung (48) aufweist, die die Objektposition mit einem Ergebnis der Überwachung des mindestens einen Schutzfeldes (36, 38) vergleicht.

5. Sicherheitssystem nach Anspruch 4,
wobei die nicht sichere Auswertungseinheit (40) dafür ausgebildet ist, anhand der Objektposition vorherzusagen, welches Schutzfeld (36, 38) verletzt ist, und diese Vorhersage an die Sicherheitssteuerung (48) zu übermitteln.

6. Sicherheitssystem nach einem der vorherigen Ansprüche,
das einen zweiten sicheren Sensor (10b) zum Erfassen von Sensordaten (44b) aus einer Umgebung der Maschine (32) aufweist, der eine zweite sichere Auswertungseinheit (28) zur Überwachung mindestens eines Schutzfeldes durch eine sichere Schutzfeldauswertung (42b) seiner Sensordaten, eine zweite sichere Schnittstelle zur Ausgabe eines Ergebnisses der Überwachung des mindestens einen Schutzfeldes (36, 38) und eine zweite nicht sichere Schnittstelle zur Ausgabe von Sensordaten (44b) an die nicht sichere Auswertungseinheit (40) aufweist.

7. Sicherheitssystem nach Anspruch 6,
wobei das Sicherheitssystem dafür ausgebildet ist, die Objektpositionen aus Sensordaten (44a) des ersten Sensors (10a) anhand der Überwachung des mindestens einen Schutzfeldes (36, 38) des zweiten Sensors (10b) und/oder die Objektpositionen aus Sensordaten (44b) des zweiten Sensors (10b) anhand der Überwachung des mindestens einen Schutzfeldes (36, 38) des ersten Sensors (10a) zu plausibilisieren.

8. Sicherheitssystem nach einem der vorherigen Ansprüche,
wobei die nicht sichere Auswertungseinheit (40) dafür ausgebildet ist, eine Objektverfolgung von Objekten (20, 34) in dem Erfassungsbereich (18) durchzuführen.

9. Sicherheitssystem nach einem der vorherigen Ansprüche,
wobei der erste sichere Sensor (10a) eine 3D-Kamera, insbesondere eine Lichtlaufzeitkamera ist.

10. Sicherheitssystem nach einem der vorherigen Ansprüche,
das dafür ausgebildet ist, Sensordaten (44) mit einer zugehörigen Objektposition und/oder einem Ergebnis der Schutzfeldauswertung (42) als annotierte Trainingsdaten zu speichern oder auszugeben, insbesondere jeweils ausgelöst durch eine erfolgreiche Plausibilisierung, eine Schutzfeldverletzung und/oder eine beendete Schutzfeldverletzung.

11. Sicherheitssystem nach einem der vorherigen Ansprüche,
das eine Sicherheitsreaktion der Maschine (32) auslöst, wenn sich ein Objekt (20, 32) an einer gefährlichen Position und/oder in einer gefährlichen Bewegung befindet.

12. Sicherheitssystem nach einem der vorherigen Ansprüche,
das als sicherer Personenzähler ausgebildet ist.

13. Verfahren zum Absichern einer Maschine (32), bei dem mit mindestens einem ersten sicheren Sensor (10) Sensordaten aus einem Erfassungsbereich (18) in einer Umgebung der Maschine (32) erfasst und zur Überwachung mindestens eines Schutzfeldes (36, 38) von dem ersten Sensor (10) durch eine sichere Schutzfeldauswertung (42) ausgewertet werden, Sensordaten (44) an eine nicht sichere Auswertungseinheit (40) ausgegeben werden und dort durch eine nicht sichere Positionsauswertung (46) der Sensordaten (44) Objektpositionen von in dem Erfassungsbereich (18) befindlichen Objekten (20, 32) bestimmt werden,wobei die Objektpositionen anhand der Überwachung des mindestens einen Schutzfeldes (36, 38) plausibilisiert werden,
**dadurch gekennzeichnet,**
**dass** fortlaufend anhand einer jeweiligen Objektposition ein Schutzfeld (36, 38) ausgewählt wird, das von einem Objekt (20, 34) an dieser Objektposition nicht verletzt wird, so dass die Schutzfelder gleichsam vor dem Objekt zurückweichen,
oder fortlaufend anhand einer jeweiligen Objektposition ein Schutzfeld (36, 38) ausgewählt wird, das von einem Objekt (20, 34) an dieser Objektposition verletzt wird, so dass die Schutzfelder in einer gleichsam invertierten Logik mit dem Objekt an einer erwarteten Objektposition mitwandern,
oder fortlaufend anhand einer jeweiligen Objektposition ein Mutingbereich ausgewählt wird, so dass der Mutingbereich mit der erwarteten Objektposition mitwandert.

## Claims

1. A safety system for safeguarding a machine (32), wherein the safety system has at least one first safe sensor (10) for the detection of sensor data (44) from a detection zone (18) in an environment of the machine (32) and an unsafe evaluation unit (40); wherein the first safe sensor (10) has a first safe evaluation unit (28) for monitoring at least one protected field (36, 38) by a safe protected field evaluation (42) of the sensor data (44), a first safe interface (30) to output a result of the monitoring of the protected field (36, 38), and a first unsafe interface to output sensor data (44) to the unsafe evaluation unit (40), wherein the unsafe evaluation unit (40) is configured to determine object positions of objects (20, 34) located in the detection zone (18) by an unsafe position evaluation (46) of the sensor data (44), and wherein the safety system is furthermore configured to plausibilize the object positions based on the monitoring of the at least one protected field (36, 38),
**characterized in that**
the unsafe evaluation unit (40) is configured to continuously select a protected field (36, 38) based on a respective object position that is not infringed by an object (20, 34) at this object position so that the protected fields so-to-say move back from the object,
or to continuously select a protected field (36, 38) based on a respective object position that is infringed by an object (20, 34) at this object position so that, in a so-to-say inverted logic, the protected fields move together with the object at an expected position,
or to continuously select a muting zone based on a respective object position so that the muting zone moves together with the expected object position.

2. A safety system according to claim 1,
wherein a plurality of protected fields (36, 38) are stored in the first safe evaluation unit (28) that together form a pattern for possible object positions in the detection zone (18).

3. A safety system according to claim 2,
wherein, depending on the object position in the pattern, a protected field (36, 38) omits this object position.

4. A safety system according to any one of the preceding claims,
which has a safety controller (48) that compares the object position with a result of the monitoring of the at least one protected field (36, 38).

5. A safety system according to claim 4,
wherein the unsafe evaluation unit (40) is configured to predict which protected field (36, 38) has been infringed based on the object position and to transmit this prediction to the safety controller (48).

6. A safety system according to any one of the preceding claims, which has a second safe sensor (10b) for detecting sensor data (44b) from an environment of the machine (32) that has a second safe evaluation unit (28) for monitoring at least one protected field by a safe protected field evaluation (42b) of its sensor data; a second safe interface to output a result of the monitoring of the at least one protected field (36, 38), and a second unsafe interface to output sensor data (44b) to the unsafe evaluation unit (40).

7. A safety system according to claim 6,
wherein the safety system is configured to plausibilize the object positions from sensor data (44a) of the first sensor (10a) based on the monitoring of the at least one protected field (36, 38) of the second sensor (10b) and/or to plausibilize the object positions from sensor data (44b) of the second sensor (10b) based on the monitoring of the at least one protected field (36, 38) of the first sensor (10a).

8. A safety system according to any one of the preceding claims,
wherein the unsafe evaluation unit (40) is configured to carry out object tracking of objects (20, 34) in the detection zone (18).

9. A safety system according to any one of the preceding claims,
wherein the first safe sensor (10a) is a 3D camera, in particular a time of flight camera.

10. A safety system according to any one of the preceding claims, which is configured to store or output sensor data (44) with an associated object position and/or a result of the protected field evaluation (42) as annotated training data, in particular respectively triggered by a successful plausibilization, a protected field infringement, and/or a terminated protected field infringement.

11. A safety system according to any one of the preceding claims, which triggers a safety response of the machine (32) when an object (20, 32) is at a hazardous position and/or in a hazardous motion.

12. A safety system according to any one of the preceding claims, which is configured as a safe people counter.

13. A method of safeguarding a machine (32) in which sensor data from a detection zone (18) are detected in an environment of the machine (32) by at least one first safe sensor (10) and are evaluated by a safe protected field evaluation (42) for monitoring at least one protected field (36, 38) by the first sensor (10), sensor data (44) are output to an unsafe evaluation unit (40) and object positions of objects (20, 32) located in the detection zone (18) are determined by an unsafe position evaluation (46) of the sensor data (44) there, wherein the object positions are plausibilized based on the monitoring of the at least one protected field (36, 38), **characterized in that**,
based on a respective object position, a protected field (36, 38) is continuously selected that is not infringed by an object (20, 34) at this object position so that the protected fields so-to-say move back from the object, or, based on a respective object position, a protected field (36, 38) is continuously selected that is infringed by an object (20, 34) at this object position so that, in a so-to-say inverted logic, the protected fields move together with the object at an expected position, or, based on a respective object position, a muting zone is continuously selected so that the muting zone moves together with the expected object position.

## Revendications

1. Système de sécurité pour sécuriser une machine (32), le système de sécurité comportant au moins un premier capteur sécurisé (10), destiné à acquérir des données de capteur (44) depuis une zone de détection (18) située dans un environnement de la machine (32), et une unité d'évaluation non sécurisée (40),
dans lequel
le premier capteur sécurisé (10) comprend une première unité d'évaluation sécurisée (28) pour surveiller au moins un champ de protection (36, 38) par une évaluation de champ de protection sécurisée (42) des données de capteur (44), une première interface sécurisée (30) pour délivrer un résultat de la surveillance du champ de protection (36, 38), et une première interface non sécurisée pour délivrer les données de capteur (44) à l'unité d'évaluation non sécurisée (40),
l'unité d'évaluation non sécurisée (40) est conçue pour déterminer, par une évaluation de position non sécurisée (46) des données de capteur (44), des positions d'objets (20, 34) situés dans la zone de détection (18), et
le système de sécurité est en outre conçu pour vérifier la plausibilité des positions d'objets à l'aide de la surveillance dudit au moins un champ de protection (36, 38),
**caractérisé en ce que**
l'unité d'évaluation non sécurisée (40) est conçue pour sélectionner en continu, à l'aide d'une position d'objet respective, un champ de protection (36, 38) qui n'est pas violé par un objet (20, 34) à cette position d'objet, de sorte que les champs de protection reculent pour ainsi dire devant l'objet,
ou sélectionner en continu, à l'aide d'une position d'objet respective, un champ de protection (36, 38) qui est violé par un objet (20, 34) à cette position d'objet, de sorte que les champs de protection se déplacent avec l'objet à une position d'objet attendue selon une logique pour ainsi dire inversée, ou sélectionner en continu, à l'aide d'une position d'objet respective, une zone d'inhibition, de sorte que la zone d'inhibition se déplace avec la position d'objet attendue.

2. Système de sécurité selon la revendication 1,
dans lequel une pluralité de champs de protection (36, 38) sont enregistrés dans la première unité d'évaluation sécurisée (28), qui forment ensemble une grille pour les positions d'objet possibles dans la zone de détection (18).

3. Système de sécurité selon la revendication 2,
dans lequel, pour chaque position d'objet dans la grille, un champ de protection (36, 38) évite cette position d'objet.

4. Système de sécurité selon l'une des revendications précédentes, comprenant une unité de commande de sécurité (48) qui compare la position d'objet avec un résultat de la surveillance dudit au moins un champ de protection (36, 38).

5. Système de sécurité selon la revendication 4,
dans lequel l'unité d'évaluation non sécurisée (40) est conçue pour prédire, à partir de la position d'objet, quel champ de protection (36, 38) est violé, et pour transmettre cette prédiction à l'unité de commande de sécurité (48).

6. Système de sécurité selon l'une des revendications précédentes, comprenant un deuxième capteur sécurisé (10b) pour acquérir des données de capteur (44b) depuis un environnement de la machine (32), qui comprend une deuxième unité d'évaluation sécurisée (28) pour surveiller au moins un champ de protection par une évaluation de champ de protection sécurisée (42b) de ses données de capteur, une deuxième interface sécurisée pour délivrer un résultat de la surveillance dudit au moins un champ de protection (36, 38), et une deuxième interface non sécurisée pour délivrer des données de capteur (44b) à l'unité d'évaluation non sécurisée (40).

7. Système de sécurité selon la revendication 6,
dans lequel le système de sécurité est conçu pour déterminer les positions d'objets à partir des données de capteur (44a) du premier capteur (10a) à l'aide de la surveillance dudit au moins un champ de protection (36, 38) du deuxième capteur (10b), et/ou pour vérifier la plausibilité des positions d'objets à partir des données de capteur (44b) du deuxième capteur (10b) à l'aide de la surveillance dudit au moins un champ de protection (36, 38) du premier capteur (10a).

8. Système de sécurité selon l'une des revendications précédentes, dans lequel l'unité d'évaluation non sécurisée (40) est conçue pour effectuer un suivi des objets (20, 34) dans la zone de détection (18).

9. Système de sécurité selon l'une des revendications précédentes, dans lequel le premier capteur sécurisé (10a) est une caméra 3D, en particulier une caméra à temps de vol.

10. Système de sécurité selon l'une des revendications précédentes,
qui est conçu pour stocker ou délivrer des données de capteur (44) avec une position d'objet associée et/ou un résultat de l'évaluation de champ de protection (42) en tant que données d'entraînement annotées, en particulier en étant déclenché respectivement par une vérification réussie de la plausibilité, par une violation du champ de protection et/ou par l'achèvement d'une violation du champ de protection.

11. Système de sécurité selon l'une des revendications précédentes,
qui déclenche une réaction de sécurité de la machine (32) lorsqu'un objet (20, 32) se trouve dans une position dangereuse et/ou effectue un mouvement dangereux.

12. Système de sécurité selon l'une des revendications précédentes,
qui est conçu comme un compteur de personnes sécurisé.

13. Procédé pour sécuriser une machine (32), dans lequel, au moyen d'au moins un premier capteur sécurisé (10), des données de capteur sont acquises depuis une zone de détection (18) située dans un environnement de la machine (32) et, en vue de surveiller au moins un champ de protection (36, 38) par le premier capteur (10), ces données sont évaluées par une évaluation sécurisée du champ de protection (42), les données de capteur (44) sont délivrées à une unité d'évaluation non sécurisée (40) où, par une évaluation de position non sécurisée (46) des données de capteur (44), les positions d'objets (20, 32) situés dans la zone de détection (18) sont déterminées, et la plausibilité des positions d'objets est vérifiée à l'aide de la surveillance dudit au moins un champ de protection (36, 38),
**caractérisé en ce que**
à l'aide d'une position d'objet respective, un champ de protection (36, 38) est sélectionné en continu, qui n'est pas violé par un objet (20, 34) à cette position d'objet, de sorte que les champs de protection reculent pour ainsi dire devant l'objet,
ou, à l'aide d'une position d'objet respective, un champ de protection (36, 38) est sélectionné en continu, qui est violé par un objet (20, 34) à cette position d'objet, de sorte que les champs de protection se déplacent avec l'objet à une position d'objet attendue selon une logique pour ainsi dire inversée,
ou, à l'aide d'une position d'objet respective, une zone d'inhibition est sélectionnée en continu, de sorte que la zone d'inhibition se déplace avec la position d'objet attendue.
